# EUROPEAN PATENT SPECIFICATION

(11) **EP 0 680 105 B1**
(45) Date of publication and mention of the grant of the patent: **20.05.1998**
(21) Application number: 95500038.5
(22) Date of filing: 30.03.1995
(51) Int. Cl.: H01M 2/16, H01M 4/68

(54) **Electric storage battery**
Elektrischer Akkumulator
Accumulateur électrique

(30) Priority: 06.04.1994 ES 9400732
(43) Date of publication of application: 02.11.1995
(73) Proprietor: SOCIEDAD ESPANOLA DEL ACUMULADOR TUDOR, S.A., E-28027 Madrid (ES)
(72) Inventor: Fernandez Garcia, Melchor, E-28805 Alcala de Henares (Madrid) (ES); Trinidad Lopez, Francisco, E-28804 Alcala de Henares (Guadalajara) (ES)
(74) Representative: Davila Baz, Angel

(56) References cited:
- EP-A- 0 466 302
- WO-A-91/16733
- US-A- 4 228 580
- US-A- 4 265 985
- US-A- 4 906 540

## Description

This invention refers to an electric storage battery, preferably of the lead-acid type, made of positive and negative battery plates plus intermediate micro-fibre separators.

The electro-chemical cells, such as the lead batteries, are known since the end of last century. In their current configuration they are made up of a lead dioxide anode, a soft lead cathode and a separator made of cellulose or plastic material, which mission is to physically separate the plates, also supplying a passageway through the electrolyte for the electric current conducing ions.

The new applications currently required for batteries have made it necessary for the technological developments achieved in this and the prior decades to focus mainly in obtaining batteries with minimum or no maintenance requirements, minimum gas emissions, allowing their installation in "clean" environments and an optimum working life period, to suit applications requiring a high number of charge-discharge cycles, such as electric vehicle and traction applications.

These advances have been achieved working fundamentally upon the characteristics of the separator employed, which has allowed putting into operation the so called "oxygen cycle" in the lead acid battery, leading to recombination or valve regulated batteries (VRLA).

The operating characteristics and principle of these batteries is described in the U.S. patents 3.562.861 and 4.383.011, U.K. patents 79.34792 and 80.32433 and Spanish patents 526.291 and 524.556, which describe the modifications introduced as regards plates, containers and covers as well as fundamentally at separator level. Regarding this component, its properties and composition are described in the U.S. patent 5.091.275 and in the European patent 0466.302 A1.

These materials are essentially made up of a bed of non-woven fibres formed by a physical mixture of said fibres arranged at random. In order to provide the separator with the properties required for its application in the battery, the base fibre, must have very exact dimensional characteristics. Specifically its length must be of around 10 µm and its diameter in the 0.1 - 1 µm range. These basic micro-fibre properties allow the obtention of a separator featuring the following characteristics: a porosity of about 90-95% with a pore diameter of around 5-25 µm. A specific surface in the 0.8-2.0 m²/g range, a tensile strength of around 600 N/m and finally electric resistivity of around 0.025 Ω/cm².

The characteristics of the separator obtained may be modified to some extent by modifying the characteristics of the base fibre. The fore mentioned base fibre modification essentially refers to its dimensional characteristics. In this sense, the use of smaller micro-fibre leads to separator materials with a greater specific surface, greater acid retention capacity and a smaller pore size. The use of larger micro-fibre would modify these properties in the opposite direction, taking nevertheless into account that separator properties can not be varied indefinitely but only within relative narrow margins.

It is also well known that the characteristics of the micro-fibre separator may be modified through the addition of different mixtures that may include silica as a component in different varieties and concentrations, although generally forming part of a "binder" mixture that also includes bonding compounds, inorganic salts, etc.

For example, European patents applications EP 0.253.987A1 and EP 0.334.091A1 claim respectively a separator and a battery having a microfibre separator incorporating a mixture of various components. Patents US 5.091.275 and WO 91/16.733 both claim a micro-fibre separator incorporating a mixture that includes an inorganic salt plus polymerized colloid silica. The European patent EP 0.466.302A1 and the Spanish patent 519.789 both claim a micro-fibre separator incorporating respectively a mixture and a diatomaceus earth with other components.

The object of this invention is a battery, which operational characteristics have been substantially modified based on the inclusion of a glass micro-fibre or plastic micro-fibre separator to which, only precipitated silica has been added in a 1 to 20% and preferably 1 to 10% ratio, which produces a very important modification of its characteristics and, therefore also those of the battery in which it is integrated. At battery level there is a substantial increase of its achievable working life, a decrease in the level of corrosion and positive plate growth problems, and a decrease in the number of possible causes of failure such as short circuits across de separators.

In accordance with this invention, a lead-acid battery is modified in its standard configuration through the incorporation to the positive plates, as supports, of either lead-calcium alloy or low antimony content grids, and to the negative plates, lead Calcium alloy grids and the inclusion as a separator of a material based on glass micro-fibre or plastic micro-fibre, or a mixture of both in any proportion, to which has been added a given proportion of, only precipitated silica during the manufacturing process, which remains incorporated in the separator structure, producing a very important change of its characteristics.

The addition of the precipitated silica is possible because of its very different size with respect to the structure of the separator. In fact, the average size of the silica particles varies, depending on the type, between 8 and 30 nm, whereas the average size of the micro-fibre separator pore is around 12 µm. This allows to incorporate a relatively high number of particles into the separator structure.

In order to achieve the characteristics detailed further on the battery object of the invention, it is necessary to incorporate only precipitated silica into the separator, without any other component. The addition of the precipitated silica is effected by adding it into the fibre dispersion tank, inside which it is fully dispersed, through vigorous agitation. In the following separator formation stage, most of the silica is then integrated into its structure.

The modifications that silica introduces into the separator and its influence upon the battery object of this invention are:
a) Porosity: it does not change substantially with respect to that of the 100% micro-fibre separator. The material retains a very high degree of porosity of around 90-95% because, the precipitated silica particles, due to their small size, fundamentally fill up the larger size pores in the structure of the separator. Given the low proportion of silica employed, this leads to full porosity conservation.
b) Pore size: it is substantially modified through the addition of precipitated silica, experimenting a decrease up about 30% when the silica concentration goes from 0 to 6%. The effect of the pore size decrease is different for maximum, minimum and average pore diameters. In fact, with respect of maximum pore diameter, its decrease is of about 35% for a 6% silica addition. Calculated upon the average diameter, the decrease would be of about 30% for the same concentration and, if calculated in respect of the minimum diameter, the decrease would then be of only 17% for the same precipitated silica concentration. The explanation of this fact resides in the preferential deposition of silica inside the larger size pores within the separator structure.
c) Specific surface: The specific surface of the micro-fibre separator experiments a very strong increase due to the inclusion of silica in its structure. The increase is of around 300% for 4% silica additions and 700% for 6% silica additions. The explanation is the high specific surface of the silica when compared with that of plastic micro-fibre or glass micro-fibre. In fact, whereas micro-fibre has a specified surface of about 2 m²/g, precipitated silica has a value of around 200-300 m²/g. Minor additions such as the ones already mentioned lead to spectacular increases of the specific surface of the separator.

The remaining properties, such as mechanical and electrical (electrical resistance), as well as those that refer to acid absorption and retention capacity, remain practically unchanged.

This modification of the properties of the separator has a marked influence upon the behavior of the battery incorporating it, the characteristics of which are modified as follows:
a) The separator pore size decrease, and particularly that of the maximum size, has a strong influence in the behaviour and working life of the battery, all of this in applications requiring deep and particularly repetitive cycles, such batteries used in motive power applications (forklifts) as well as batteries to be used in electric vehicles. It also improve significantly the behaviour of batteries in floating applications for uninterrupted power supplies, telephone exchanges, etc., particularly at facilities where equalizing charges are not employed. This will be explained in detail in the example indicate below.
b) The increase of the specific surface of the separator causes a substantial increase of its working life performance (duration), given that this material with high specific surface may act as an element or ion retaining filter, which transfer between plates within the battery would be of interest to avoid. Due to this property, it is possible to modify the type of alloy to use fundamentally in the positive plates making use of low antimony content alloys, more adequate to cycle service, in order to increase its working life duration.

The characteristics and advantages of the invention may be expressed in the following description, made with reference to the attached drawings, in which:

Figure 1 is a schematic perspective of a battery including the principles of the invention.

Figures 2a, 2b and 2c are schematic diagrams representing the behavior of batteries with different characteristics, showing voltage values in the Y (vertical) axis and number of cycles in the X (horizontal) axis.

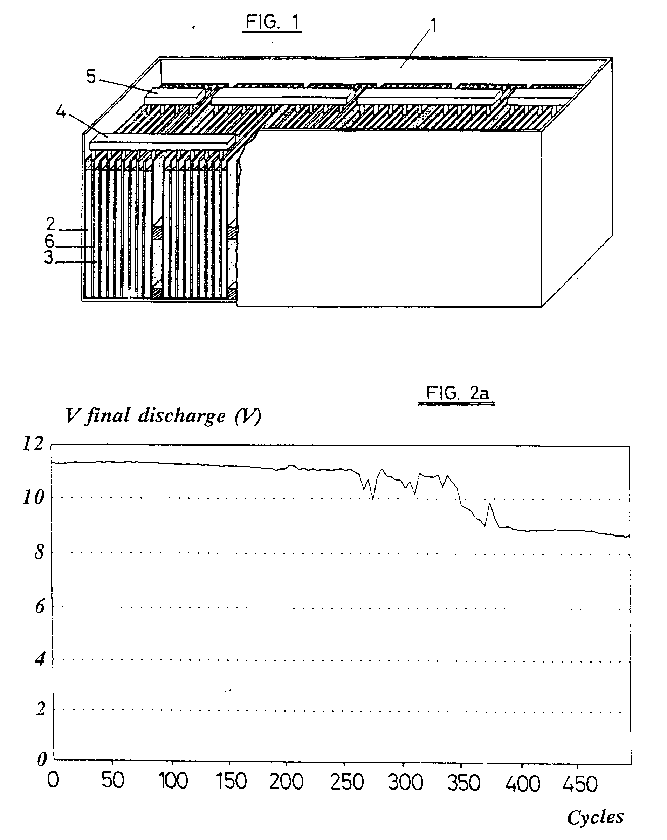

The battery shown in Figure 1 includes a container 1, within which are assembled the positive 2 and negative 3 plates, both of them joined together through their corresponding connection bars 4 and 5.

Between plates 2 and 3 are arranged several separators 6 made of a material based on glass micro-fibre or plastic type material or a mixture of both. To this base, has been added a certain proportion of only precipitated silica during the manufacturing process, being said silica incorporated into the structure of separator 6, modifying its characteristics to great extent.

Container 1 shall be closed by a cover not shown.

The battery with the characteristics of the invention may adopt a structure different to that described.

The advantages of these batteries were clearly shown during the tests carried as described below.

Three groups of batteries were prepared, with the following characteristics:

The first group was employed as the control group, assembling for that purpose six recombination batteries using standard design and components, that is to say: lead-calcium alloy in both positive and negative plates, 100% micro-fibre separator without any addition and rest of components standard.

The second group is made up of 6 batteries in which only the separator was modified, with respect to the previously mentioned group. They incorporated micro-fibre separator to which 4% precipitated silica was added.

Finally, the third group incorporated positive plates with low antimony content alloy (of around 2%), as well as separators with a 4% silica addition, being the rest of the components identical to those of the first group.

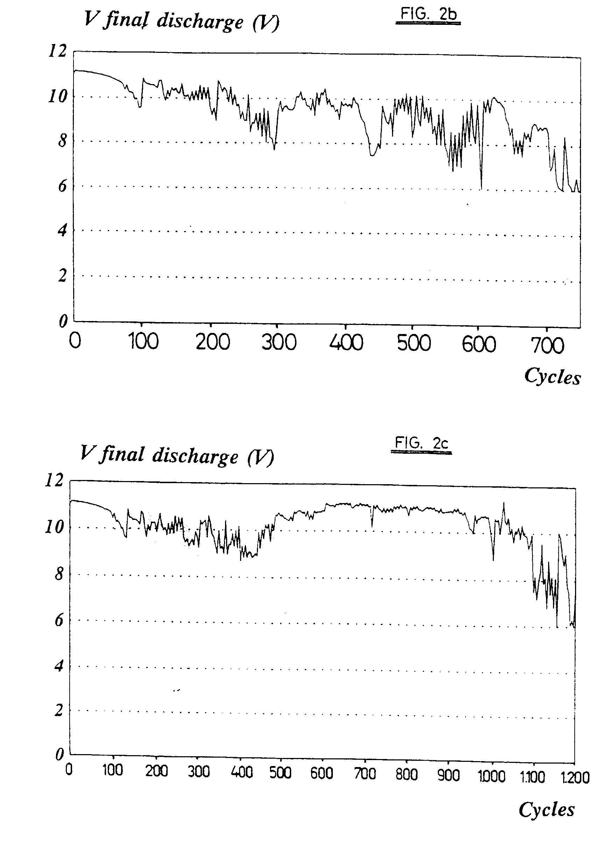

All three groups were subjected to initial characterizing and preparation tests, after which were subjected to deep cycling tests, with a discharge depth of 80% of the real capacity and a 1.5 hours discharge regime. Figures 2a, 2b and 2c represent the durations obtained as a number of cycles, for the three groups of batteries. The durations obtained are clearly appreciated. Whereas the first group achieves a 500 cycle average duration, the group incorporating the separators with precipitated silica addition, reaches 800 cycles. Finally, the group with low antimony alloy in the positive plate and silica addition to the separators obtains a 1200 cycles average duration.

Once the cycle tests were completed, the batteries were taken apart and analyzed, observing the following facts as the most relevant findings attributable to the separator:

A very low stratification in the density of the sulfuric acid between the upper and lower separator sections was observed in both the second and third groups, with a maximum difference of 0.015 g/cm³, whereas in the first group this difference amounted to 0.040. The silica addition has reduced the stratification substantially through the increase in the acid retention capacity in the separator structure due to the pore size decrease caused by the addition of precipitated silica.

Additionally, and whereas a number of short circuits across the separator, caused by lead particle deposition within its structure, could be observed in the first group, no short circuits could be observed in the second and third group of batteries, where the separator was found to be clean throughout. This is once again a consequence of the smaller pore size and more uniform distribution caused by the addition of silica.

## Claims

1. An electric lead-acid storage battery, made up of a container (1) with safety valve, inside which are housed a number of positive (2) and negative (3) polarity plates and a number of intermediate separators (6) that physically isolate said plates and allow ionic conduction between them, the positive plates (2) incorporating, as support, either lead-calcium alloy, or low antimony content grids, and the negative plates (3) incorporating, as substrate, lead-calcium alloy grids, characterized in that the separator is made using plastic or glass micro-fibre with the addition of only precipitated silica, without any other component, in amounts of 1 - 20% and preferably 2 - 8%, said separator having a reduced pore size of a value between 5 and 10 microns.

2. A battery according to claim 1, characterized in that the positive plates (2) incorporate a lead-calcium alloy substrate, with a 0.03 - 0.10% calcium percentage and preferably 0.04 - 0.07% with the addition of tin in percentages 0.3 - 1.5%.

3. A battery according to claim 1, characterized in that the positive grids are made up on the base of a low antimony content alloy, with a percentage between 0.5 - 3% and preferably between 1 - 2%.

## Patentansprüche

1. Ein elektrischer Blei-Säure-Akkumulator, der aus einem Behälter (1) mit Sicherheitsventil besteht, in dem eine Reihe von positiven (2) und negativen (3) Polaritätsplatten und eine Reihe von dazwischen liegenden Teilern (6) untergebracht sind, welche die genannten Platten physisch voneinander trennen und einen Ionenaustausch zwischen ihnen erlauben, wobei die positiven Platten (2) als Halterung entweder eine Blei-Kalzium-Legierung oder Gitter mit niedrigem Antimongehalt und die negativen Platten als Substrat Gitter aus Blei-Kalzium-Legierung einschließen, dadurch gekennzeichnet, daß die Teiler unter Verwendung von Plastik oder Mikroglasfiber lediglich unter Hinzugabe von niedergeschlagenem Kieselgel in einer Menge von 1-20%, vorzugsweise 2-8%, ohne die Verwendung von anderen Zusatzstoffen hergestellt werden, wobei die genannten Teiler eine kleine Porengröße von zwischen 5 und 10 Mikron aufweisen.

2. Ein Akkumulator gemäß Anspruch 1, dadurch gekennzeichnet, daß die positiven Platten (2) ein Substrat aus Blei-Kalzium-Legierung mit einem Kalziumgehalt von 0,03-0,10% und vorzugsweise von 0,04-0,07% unter Hinzufügung von Zinn in der Größenordnung von 0,3-1,5% einschließen.

3. Ein Akkumulator gemäß Anspruch 1, dadurch gekennzeichnet, daß die positiven Gitter basierend auf einer Legierung mit niedrigem Antimongehalt in der Größenordnung von 0,5-3%, vorzugsweise 1-2%, hergestellt sind.

## Revendications

1. Un accumulateur électrique de plomb-acide, constitué d'un conteneur (1) ayant une soupape de sûreté, à l'intérieur duquel est logé un nombre de plaques à polarité positive (2) et négative (3) et un nombre de séparateurs intermédiaires (6) qui isolent physiquement lesdites plaques et qui permettent une conduite ionique entre celles.ci, les plaques positives (2) incorporant, en tant que support, des grilles ayant un contenu en alliage de plomb-calcium ou bien un faible contenu en antimoine, et les plaques négatives (3) incorporant, en tant que substrat, des grilles en aliage de plomb-calcium, caractérisé en ce que le séparateur est fabriqué en utilisant une microfibre de verre ou de plastique avec la seule adition de silice précipitée, sans aucun autre composant, les quantités allant de 1 à 20% et de préférence de 2 à 8, ledit séparateur ayant une dimension de pore réduite ayant une valeur entre 5 et 10 microns.

2. Un accumulateur selon la revendication 1, caractérisé en ce que les plaques positives (2) comprennent un substrat en alliage de plomb-calcium, avec un pourcentage de calcium de 0.03-0.10% et de préférence 0.04 - 0.07% avec l'adition d'étain à des pourcentages de 0.3 - 1.5%.

3. Un accumulateur selon la revendication 1, caractérisé en ce que les grilles positives sont constituées sur la base d'un alliage à faible contenu d'antimoine, avec un pourcentage entre 0.5 - 3% et de préférence entre 1 - 2%.
